# EUROPEAN PATENT APPLICATION

(11) **EP 2 378 414 A2**
(43) Date of publication of application: **19.10.2011**
(21) Application number: 09836308.8
(22) Date of filing: 11.12.2009
(51) Int. Cl.: G06F 9/44

(54) **REMOTE UPDATE METHOD FOR FIRMWARE**

(30) Priority: 31.12.2008 KR 20080138647
(71) Applicant: Nautilus Hyosung Inc., Seoul 135-952 (KR)
(72) Inventor: SHIN, Jae Whan, Anyang-si Gyeonggi-do 431-729 (KR)
(74) Representative: Barth, Stephan Manuel
(86) International application number: PCT/KR2009/007429
(87) International publication number: WO 2010/076987

(57) **Abstract**

The present invention relates to a method for remotely updating firmware. In updating an automated banking machine, encrypted firmware is decrypted using an XOR table, a checksum, and a signature value stored in the header of the new firmware updated at a remote site, and the automated banking machine is updated with the new firmware. Since the firmware is conveniently updated without moving the automated banking machine to the outside, efficiency in managing the automated banking machine can be improved, and illegal handlings of the automated banking machine by external hacking attacking through a network can be prevented.

## Description

### BACKGROUND OF THE INVENTION

### 1. Field of the Invention

The present invention relates to a method for remotely updating firmware, and more specifically, to a method for remotely updating firmware, wherein in updating an automated banking machine, firmware encrypted at a remote site is decrypted using a series of information contained in the header of the firmware, and the firmware of the automated banking machine is updated after a connection authority authentication is performed, thereby preventing various hackings and financial safety accidents that can occur at the automated banking machine.

### 2. Description of the Related Art

Generally, in order to allow only authorized users to normally access a machine, such as an automated banking machine, which needs to prevent other people from illegally connecting and using the machine, a password is issued to each user, and the user is required to input the password before performing a financial processing function. Then, it is confirmed whether or not the inputted password matches a previously registered password, and the process proceeds to the next step only when the passwords match.

An encryption device for encrypting inputted data is combined with a keypad for inputting a password in the automated banking machine or the like that requires utmost security. An encryption pin pad module employing a data encryption standard (DES) algorithm is widely used as the encryption device. The DES pin pad module, which performs encryption or key processing on a user's password, is provided with numeric buttons for inputting the password, a plurality of menu buttons for performing a variety of functions, and SRAM for storing an encryption key. The SRAM is installed inside the machine to prevent arbitrary handlings from the outside, but the numeric buttons and menu buttons are installed so that top surfaces thereof are exposed at a place easy to handle the pin pad module by a user.

In addition, the types of the DES pin pad module include a bus type installed to an input-output slot of a system, a serial type connected to a communication port of a system, and an EPP type integrated with the pin pad for inputting a password.

An EPP type pin pad module stores EPP firmware manufactured by a laboratory of a company manufacturing a corresponding machine, wherein the EPP firmware is encrypted through a public key (PK), a private key (SK), a firmware checksum, a signature value, and an XOR table generated using a special encryption device (TRSM).

Conventionally, firmware stored in an automated banking machine can be updated at a relevant place after moving the automated banking machine to a laboratory or a factory, i.e., only at a special place where security is guaranteed. Alternatively, the firmware can be remotely updated if payment card industry (PCI) specification B4 is satisfied.

However, in the former case, since the automated banking machine should be moved to a specific place, workers suffer inconvenience furthermore in doing the job, and thus efficiency is lowered in managing the automated banking machine. In the latter case, if the PCI specification B4 is not satisfied, the firmware cannot be updated remotely.

### SUMMARY OF THE INVENTION

The present invention is conceived to solve the aforementioned problems. Accordingly, an object of the present invention is to provide a method for remotely updating firmware, in which when an automated banking machine is remotely updated with new firmware, the updated new firmware encrypted using an XOR table, a checksum, and a signature value stored in the header of the firmware is decrypted to update the firmware of the automated banking machine, thereby preventing illegal handlings of the automated banking machine by external hackings attacking through a network and simultaneously improving efficiency in managing the automated banking machine.

According to an aspect of the present invention for achieving the object, there is provided a method for remotely updating new firmware of an automated banking machine with new firmware, the method comprising: a first step of downloading encrypted new firmware from a host server; a second step of converting encrypted firmware data into real firmware using an XOR table contained in a header of the encrypted firmware; a third step of generating a signature value using the header of the encrypted firmware; a fourth step of comparing the signature value generated in the third step with a signature value stored in the header; a fifth step of generating a new checksum value (CS_{RF}) by performing checksum on the real firmware, if the signature values compared in the fourth step match; a sixth step of comparing the new checksum value (CS_{RF}) generated in the fifth step with a checksum value (CS_{H}) stored in the header; and a seventh step of completing verification on the new firmware and updating the automated banking machine with the new firmware, if the checksum values compared in the sixth step match.

The method for remotely updating firmware according to the present invention is effective in that the firmware can be conveniently updated without moving an automated banking machine to the outside, thereby improving efficiency in managing the automated banking machine and simultaneously guaranteeing security against external hackings attacking through a network.

### BRIEF DESCRIPTION OF THE DRAWINGS

Fig. 1 is a block diagram showing the structure of firmware used in a method for remotely updating firmware according to the present invention.
Fig. 2 is a flowchart illustrating a process of updating firmware at an automated banking machine by the method for remotely updating firmware according to the present invention.
Fig. 3 is a flowchart illustrating a process of verifying firmware in the flowchart shown in Fig. 2.

### DESCRIPTION OF THE PREFERRED EMBODIMENT

Hereinafter, preferred embodiments of the present invention will be described in more detail. However, the present invention is not limited to the preferred embodiments thereof set forth herein without departing from the essential features of the invention.

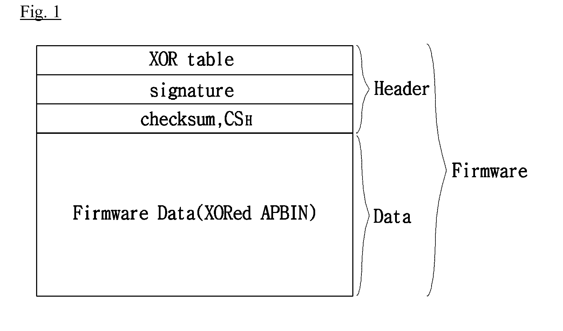

Fig. 1 is a block diagram showing the structure of firmware used in a method for remotely updating firmware according to the present invention.

Referring to Fig. 1, encrypted firmware transmitted from a host includes an encrypted firmware data (XORed APBIN) and a header for decrypting and verifying the encrypted firmware data. The header includes an XOR table, a signature value, and a checksum value (CS_{H}) for verifying the encrypted firmware data.

New firmware including such components can be decrypted and remotely updated in an automated banking machine as described below.

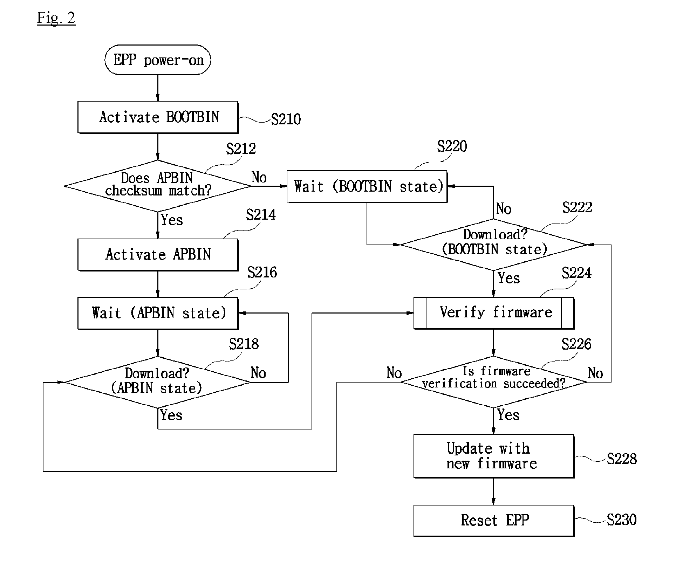

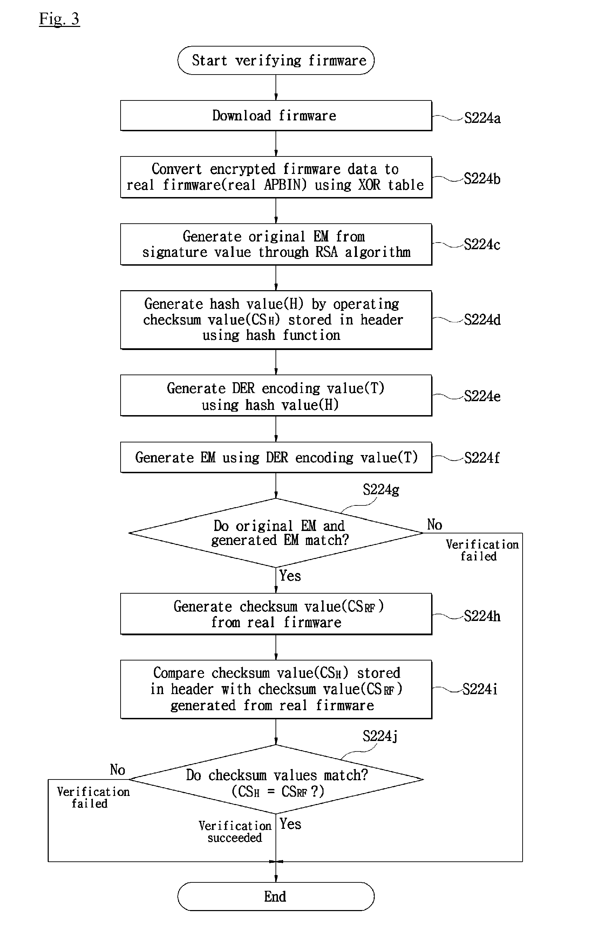

Fig. 2 is a flowchart illustrating a process of updating firmware at an automated banking machine by the method for remotely updating firmware according to the present invention, and Fig. 3 is a flowchart illustrating a process of verifying firmware in the flowchart shown in Fig. 2.

First, if the automated banking machine is booted and an operating system (OS) is normally driven, and then an EPP pin pad module starts to operate (EPP power-on), BOOTBIN is activated (step S210). Then, a checksum value is calculated for previously stored firmware (APBIN), and it is confirmed whether or not the calculated checksum value matches a checksum value stored in the firmware header (step S212).

If the checksum values match as a result of the comparison, the previously stored firmware (APBIN) is activated in order to update the automated banking machine with new firmware (step S214), and the process stays in a waiting state until a command for downloading new firmware is received (step S216).

On the other hand, if the checksum values do not match, the process stays in step S210 and waits for another command in a waiting state (step S220). At this point, if a command for confirming the version of the previously stored firmware is received, the version of the previously stored firmware is confirmed.

Thereafter, if a command for downloading new firmware is inputted (steps S218 and S222), new firmware encrypted as shown in Fig. 1 is downloaded and verified (step S224). This step will be described in further detail with reference to FIG. 3.

If the verification succeeds as a result of the verification step (step S226), the automated banking machine is updated with the new firmware (step S228), and the EPP is reset (step S230). If the verification fails (step S226), the process returns to step S218 or S222.

The process of verifying the firmware is as described below.

First, if a download command is inputted, the encrypted new firmware (APBIN) is downloaded from the host (step S224a). As shown in Fig. 1, the downloaded new firmware includes an encrypted firmware data and a header storing information for decrypting and verifying the encrypted firmware data.

If the new firmware is downloaded, the encrypted firmware data (XORed APBIN) is decrypted and converted into real firmware using the XOR table contained in the header (step S224b).

Next, an original encoded message (EM) is generated by decrypting the signature value contained in the header through the RSA algorithm using a public key (PK) (step S224c).

Then, a hash value (H) is generated by operating a checksum value of the firmware stored in the header using a hash function (step S224d).

A DER encoding value (T) is generated using the hash value (H) generated in step S224d (step S224e).

Next, a new encoded message (EM) is generated using the hash value H and the DER encoding value T respectively generated in steps S224d and S224e (step S224f).

Thereafter, the new EM generated in step S224f is compared with the original EM generated in step S224c (step S224g), and if they match each other, the process goes to the next step, and if they do not match, the process of updating the new firmware is terminated.

If the signature value of the new firmware is verified through steps S224c to S224g, verification is performed on the checksum value of the new firmware.

In performing the verification of the new firmware, a checksum value (CS_{RF}) of the real firmware generated in step S224b is generated (step S224h), and the checksum value (CS_{H}) stored in the header is compared with the checksum value (CS_{RF}) of the real firmware generated in step S224b (step S224i).

If the checksum values match each other as a result of the comparison (step S224j), verification on the new firmware is succeeded, and the automated banking machine is updated with the new firmware. If the checksum values do not match each other as a result of the comparison (step S224j), verification on the new firmware is failed, and the update process is terminated.

Although the present invention has been described and illustrated in connection with the specific embodiments as described above, it will be readily understood that various modifications can be made thereto without departing from the scope of the present invention. Therefore, the scope of the present invention is not limited to the embodiments described above but is defined by the appended claims and the equivalents thereto.

The method for remotely updating firmware according to the present invention can be used to safely and remotely update firmware applied to an automated banking machine, as well as other diverse IT devices, at a place where the automated banking machine is installed.

## Claims

1. A method for remotely updating new firmware in an automated banking machine, comprising:
a first step of downloading encrypted new firmware from a host server;
a second step of converting encrypted firmware data into real firmware using an XOR table contained in a header of the encrypted firmware;
a third step of generating a signature value using the header of the encrypted firmware;
a fourth step of comparing the signature value generated in the third step with a signature value stored in the header;
a fifth step of generating a new checksum value (CS_{RF}) by performing checksum on the real firmware, if the signature values compared in the fourth step match;
a sixth step of comparing the new checksum value (CS_{RF}) generated in the fifth step with a checksum value (CS_{H}) stored in the header; and
a seventh step of completing verification on the new firmware and updating the automated banking machine with the new firmware, if the checksum values compared in the sixth step match.

2. The method as claimed in claim 1, wherein the header stores the XOR table, the signature value, and the checksum value (CS_{H}) for decrypting and verifying the new firmware.

3. The method as claimed in claim 1, wherein the third step comprises the steps of:
generating an original encoded message (EM) by decrypting the signature value contained in the header through an RSA algorithm using a public key (PK);
generating a hash value (H) by operating a checksum value of the firmware stored in the header using a hash function;
generating a DER encoding value (T) using the hash value (H);
generating a new encoded message (EM) using the hash value (H) and the DER encoding value (T); and
performing verification on the signature value by comparing the original EM with the new EM.

4. The method as claimed in claim 3, wherein the hash function is SHA-1.
